(19) Europäisches Patentamt
European Patent Office
Office européen des brevets

(11) EP 1 201 904 B1

(12) **EUROPEAN PATENT SPECIFICATION**

(45) Date of publication and mention of the grant of the patent:
**28.12.2005 Bulletin 2005/52**

(51) Int Cl.$^7$: **F02D 41/38**, F02D 33/02, F02D 21/08, F02D 41/14, B60K 41/12, F02D 41/02, B60K 41/14

(21) Application number: **01124130.4**

(22) Date of filing: **10.10.2001**

(54) **Drive force controller of a diesel engine vehicle**

Antriebskraftsteuerung für ein Kraftfahrzeug mit einem Dieselmotor

Contrôle de force motrice pour véhicule Diesel

(84) Designated Contracting States:
**DE FR GB**

(30) Priority: **30.10.2000 JP 2000331185**

(43) Date of publication of application:
**02.05.2002 Bulletin 2002/18**

(73) Proprietor: **NISSAN MOTOR CO., LTD.**
**Yokohama-shi Kanagawa-ken (JP)**

(72) Inventors:
- **Osamura, Kensuke**
**Yokosuka-shi, Kanagawa (JP)**
- **Itoyama, Hiroyuki**
**Yokosuka-shi, Kanagawa (JP)**

(74) Representative: **Grünecker, Kinkeldey, Stockmair & Schwanhäusser Anwaltssozietät**
**Maximilianstrasse 58**
**80538 München (DE)**

(56) References cited:
**EP-A- 0 879 731**
**EP-A- 0 925 992**
**EP-A- 0 953 470**
**DE-A- 4 221 044**
**US-A- 6 027 425**
**US-A- 6 106 432**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to a drive force controller for a vehicle with a diesel engine.

In a vehicle equipped with an engine which can be controlled independently of an accelerator pedal operation by a driver, and a continuously variable transmission (CVT), there is a technique of "drive force control" which realizes a target drive force computed based on an accelerator pedal operation amount and a running condition, etc. by controlling an engine torque and a CVT speed ratio.

In this case, when the response delay of the speed ratio is compensated by the engine torque during acceleration, a target engine torque may be a large value transitionally exceeding a realizable upper limit level. It is then not only impossible to realize the target drive force, but it may be determined that drive force is a characteristic of the maximum engine torque characteristic unrelated to drivability, and drivability may be impaired.

To solve such a problem, in Japanese Patent publication No. 11-326959, it has been proposed correction of the target drive force by dynamic delay processing, and control a drive force based thereon as a target drive force which can also be realized transitionally.

In this controller, a first target drive force is set from the accelerator pedal control input as the drive force required by the driver. Dynamic delay processing is applied to this first target drive force as a first order lag so as to set a second target drive force.

The target drive force may be expressed as a relation of the following equation (1) from the engine torque and speed ratio. The engine torque required to realize the aforesaid second target drive force is calculated, and the fuel injection amount of the diesel engine is controlled to this engine torque.

$$Fd=(Te \times G \times Gf)/Rtire \qquad (1)$$

where, in Eqn. (1)
***Fd*** = drive force **[N]**
***Te*** = engine torque **[Nm]**
***G*** = speed ratio of CVT
**Gf** = reduction ratio of final reduction gear
***Rtire*** = drive wheel effective radius **[m]**

Therefore, if the engine torque is controlled to the second target drive force after compensation, an improvement in the drivability can be expected compared to the case where the drive force varies according to the maximum engine torque characteristic.

In engine torque control, in the case of a diesel engine, it is common to use the fuel injection amount as an operating amount. Here, a feature of the engine torque response of a diesel engine is that when an excess air rate is to some extent large, the response is effectively without delay according to the fuel injection amount, but the sensitivity to the fuel injection amount becomes smaller and is strongly governed by the response to the fresh air intake amount as the excess air rate becomes small.

Thus, from the viewpoint of engine torque performance, the excess air rate should be as large as possible so that there is not much effect due to the fresh air intake amount which has a slow response, but considering the exhaust performance, there is a need to reduce the fresh air intake amount at low or medium engine load, to increase exhaust gas recirculation (EGR), to suppress NOx.

To improve the response to the target drive force, when shifting to high load from low load as when the vehicle accelerates from steady running, the fresh air intake amount must be increased immediately.

The target value of the fresh air intake amount is usually set according to the engine load, and the fresh air intake amount is therefore determined according to the target fuel injection amount. However, in the aforesaid case, the target fuel injection amount is set after performing delay processing on the target drive force. Hence, the target fresh air intake amount is affected by delay processing, which conflicts with the requirement that the fresh air intake amount should be increased as rapidly as possible.

In this case, due to the response delay of the target fresh air intake amount, the engine torque response will be impaired.

Prior art document US 6,027,425 teaches a system for controlling motive force of a vehicle having an engine and a continuously variable automatic transmission connected to the engine to transmit engine torque to a drive shaft of the vehicle. In the system, a desired motive force is calculated or determined from the detected accelerator (pedal) position and vehicle speed, and based on the determined motive force a desired engine speed, more specifically a drive shaft speed of the transmission, is calculated or determined. Then inertia torque acting on the vehicle is calculated or determined based on at least the determined speed and detected speed, and a desired throttle opening is corrected by the determined inertia torque when the vehicle accelerates or decelerates. With the arrangement, the vehicle response delay due to the inertia torque is adjusted and hence, drivability and fuel economy performance are enhanced.

It is an objective of the present invention to provide a drive force controller for a vehicle provided with a diesel engine, wherein engine torque response and drivability is improved.

According to the present invention said objective is solved by a drive force controller for a vehicle provided with a diesel engine having the features of independent claim 1.

Preferred embodiments are laid down in the dependent claims.

Hereinafter the present invention is iliustrated and explained in detail by means of preferred embodiments in conjunction with the accompanying drawings. In the drawings wherein:

Fig. 1 is a system diagram of a vehicle according to a first embodiment,

Fig. 2 is a block diagram of drive force control in this system,

Fig. 3 is a block diagram of an engine torque control means,

Fig. 4 is a block diagram of a target intake fresh air amount setting means,

Fig. 5 is a map which sets a first target drive force,

Fig. 6 is a map which sets a first target fuel injection amount,

Fig. 7 is a map which sets a maximum fuel injection amount,

Fig. 8 is a map which sets a second target fuel injection amount,

Fig. 9 is a map which sets a target fresh air intake amount,

Fig. 10 is a diagram showing a table which sets an EGR valve opening,

Fig. 11 is a drive force control block diagram showing a second embodiment,

Fig. 12 is a block diagram of a means which sets a target EGR rate,

Fig. 13 is a map which sets the target EGR rate,

Fig. 14 is a diagram showing a table which sets the EGR valve opening,

Fig. 15 is a system diagram of a vehicle according to a third embodiment,

Fig. 16 is a drive force control block diagram in this system,

Fig. 17 is a block diagram of a means which sets a target supercharging pressure,

Fig. 18 is a map which sets the target supercharging pressure,

Fig. 19 is a diagram showing a table which sets the supercharger nozzle opening,

Fig. 20 is a diagram describing the effectiveness of this technical teaching.

## DETAILED DESCRIPTION OF THE PREFERRED EMBODIMENTS

Firstly, a first embodiment will be described.

Fig. 1 schematically shows the construction of the vehicle.

A diesel engine 100 mounted to a vehicle draws in fresh air (air) into a cylinder via an intake passage 101, and fuel is injected into the cylinder from an injector 102. The fuel is burnt by compression ignition, and the exhaust gas after combustion is discharged from an exhaust passage 103.

Part of this exhaust gas is recirculated into the intake passage 101 via an EGR (exhaust gas recirculation) passage 104 connected to the middle of the exhaust passage 103, and is introduced to the cylinder as EGR gas.

An EGR valve 105 is interposed in the EGR passage 104, and the exhaust gas recirculation rate is controlled by controlling the opening of this EGR valve 105. This also results in the control of the fresh air amount drawn in into the cylinder.

A continuously variable transmission (hereafter referred to as CVT) 107 is provided on the output side of this engine 100, and the output of the CVT107 is transmitted to a drive wheel 109 via a final reduction gear 108.

A controller 200 for drive force control is provided to control the CVT107 and the engine 100. This drive force control realizes a target drive force computed based on a running condition such as accelerator pedal operating amount, by controlling the engine torque and CVT speed ratio.

The controller 200 controls the fuel injection amount injected from the aforesaid injector 102, and the opening of the EGR valve 105.

To perform this control, signals are input to the controller 200 from an accelerator pedal sensor 201 which detects the operating amount of the accelerator pedal, an air flow sensor 202 which detects the fresh air intake amount on the intake side of the intake passage 101, an engine rotation sensor 203 which detects the rotation speed of the engine 100, and a vehicle speed sensor 204 which detects the vehicle speed (output rotation speed of the CVT 107).

The drive force controller comprising the controller 200 for drive force control is shown in the block diagram of Fig. 2.

The drive force controller comprises a first target drive force setting means 1, a second target drive force setting means 2, a speed ratio detection means 3, a fresh air intake amount detection means 4, an engine rotation speed detection means 5, an engine torque control means 6, a target fresh air intake amount setting means 7, and a fresh air intake amount control means 8. The detailed construction of the engine torque control means 6 is shown in Fig. 3, and the detailed construction of the target fresh air intake amount setting means 7 is shown in Fig. 4.

The target drive force setting means 1 sets a first target drive force ***tFd1*** as a target value of the force exerted by the drive wheels on the road surface, for example from the accelerator pedal operating amount **deg** and vehicle speed **Km/h.** The relation between the accelerator pedal operating amount, vehicle speed and first target drive force is prepared beforehand as a map. An example of the map which sets the first target drive force is shown in Fig. 5.

The second target drive force setting means 2 sets a second target drive force ***tFd2*** by performing dynamic delay processing from the first target drive force ***tFd1.*** Specifically, the second target drive force is calculated from the first target drive force, for example based on the following equation (2). This equation (2) uses the transfer function of a continuous time system. ***S*** is the Laplacian operator.

$$tFd2=[1/(1+\tau\,\alpha S)]\times tFd1 \qquad (2)$$

The actual computation is performed by computing the second target drive force by, for example, the following equation (3), by performing a discrete time computation.
***Z*** is the Z operator.

$$tFd2=\{(\Delta\,t/2\,\tau\,\alpha)\cdot[tFd1+z^{-1}tFd1]+(1-\Delta\,t/2\,\tau\,\alpha)\cdot z^{-1}\,tFd2\}\times(\Delta t\,/\,2\,\tau\,\alpha+1)^{-1} \qquad (3)$$

where, in the aforesaid equations (2) and (3).
***tFd2*** = second target drive force **[N]**
***tFd1*** = first target drive force **[N]**
$\tau\alpha$ = second target drive force computation time constant **[sec]**
$\Delta t$ = sampling time **[sec]**

Here, even if $\tau\alpha$ is given as a constant, it may be changed according to the running state.

$\Delta t$ is given as a constant.

The aforesaid speed ratio detection means 3 detects the speed ratio of the CVT107. Specifically, the speed ratio is calculated as [input rotation speed/output rotation speed] of the CVT107 from the engine rotation speed and the vehicle speed.

Instead of using the engine rotation sensor 203 and vehicle speed sensor 204, rotation sensors for the input and output of the CVT107 may be used.

The fresh air intake amount detection means 4 detects the fresh air amount drawn in by each cylinder.

Although it is difficult to detect the fresh air amount drawn in by each cylinder by a sensor, the fresh air amount drawn in by an intake air collector may for example be detected by an air flow sensor 202, and the amount drawn in by each cylinder estimated considering the dynamic characteristics of the intake air flow in the intake air collector.

The fresh air amount ***Qw*** drawn in by the intake air collector and the fresh air amount ***Qcw*** drawn in by the cylinder are approximately expressed by the following equation (4) as a transfer function of a continuous time system.

$$Qcw=[1/(1+2\alpha S)]\times Q\omega \qquad (4)$$

Based on the next equation (5) which is a discrete representation of equation (4), the fresh air amount ***Qcw*** drawn in by the cylinder is calculated.

$$Qc\omega=\{(\Delta t/2\,\tau\,\omega)\cdot[Q\omega+z^{-1}Q\omega]+(1\cdot\Delta\,t/2\,\tau\,\omega)\cdot z^{-1}\,Qc\omega\}\times(\Delta\,t/2\,\tau\,\omega+1)^{-1} \qquad (5)$$

where, in equations (4) and (5),
***Qcw*** = cylinder fresh air intake amount [mg/st]
***Qw*** = collector fresh air intake amount [mg/st]
$\tau w$ = parameter [sec] of the dynamic characteristics of the collector
$\Delta t$ = sampling time [sec]

Here, even if $\tau w$ is given as a constant, it may be changed according to the running state.

$\Delta t$ is given as a constant.

The engine speed detection means 5 detects the engine rotation speed by the engine rotation sensor 203.

The engine torque control means 6 controls the engine torque based on the second target drive force ***tFd2*,** the aforesaid speed ratio, the aforesaid fresh air intake amount and the aforesaid engine rotation speed.

Here, the engine torque control means 6, as shown in Fig.6, comprises a first target engine torque setting means 6-1, first target fuel injection amount setting means 6-2, maximum fuel injection amount setting means 6-3, command fuel injection amount setting means 6-4, and fuel injection amount control means 6-5.

From the aforesaid equation (1), the aforesaid target engine torque setting means 6-1 first calculates the first target engine torque ***tTe1*** as the engine torque required to realize the second target drive force ***tFd2*** from the second target drive force and the speed ratio, for example from the following equation (6). This equation is deduced from equation (1) which calculates the drive force from the engine torque and speed ratio.

$$tTe1=(tFd2 \times Rtire)/(G \times Gf) \qquad (6)$$

where, in equation (6),
***tTe1*** = first target engine torque **[Nm]**
***tFd2*** = second target drive force **[N]**
***Rtire*** = Drive wheel effective radius **[m]**
***G*** = speed ratio of CVT
***Gf*** = reduction ratio of final reduction gear.
Here, **Rtire** and ***Gf*** are given as constants.

Next, the first target fuel injection amount setting means 6-2 sets the first target fuel injection amount ***tQf1*** from the first target engine torque tTe1 and engine rotation speed.

The relation between the first target engine torque, engine rotation speed and the first target fuel injection amount is prepared beforehand as a map. An example of the map which sets the first target fuel injection amount is shown in Fig. 6. This map is found by experiment etc. as a characteristic of the engine torque relative to the engine rotation speed and fuel injection amount.

The maximum fuel injection amount setting means 6-3 sets a maximum fuel injection amount ***Qf-max*** as a ceiling value of the fuel injection amount from the fresh air intake amount and engine rotation speed based on a limit on the rich side of the excess air rate.

The relation between the fresh air intake amount, engine rotation speed and maximum fuel injection amount is prepared beforehand as a map. An example of the map which sets the maximum fuel injection amount is shown in Fig. 7. This map may be found from the excess air rate corresponding to a smoke generation amount tolerance level relative to the engine rotation speed. Specifically, numerical values of the map lattice axes are substituted for the fresh air intake amount and engine rotation speed on the right-hand side of equation (7) shown below, and the maximum fuel injection amount equivalent to this lattice is calculated.

$$Qf\text{-}max=Qc\omega/(\lambda\ min\ (Ne) \times k) \qquad (7)$$

where, in equation (7),
***Qf-max*** = maximum fuel injection amount **[mg/st]**
***Qcw*** = fresh air intake amount **[mg/st]**
λ ***min*(*Ne*)** = excess air rate corresponding to the smoke tolerance amount
***Ne*** = engine rotation speed **[rpm]**
***k*** = maximum fuel injection amount computation coefficient.

Here, k is given as a constant corresponding to the stoichiometric air-fuel ratio when the oxygen in the EGR gas is ignored, and when it is not ignored, it is set as a function of the target EGR rate.

The command fuel injection amount setting means 6-4 sets the command fuel injection amount ***iQf*** using the following equation (8) from the first target fuel injection amount ***tQf1*** and maximum fuel injection amount ***Qf-max.***

That is, the first target fuel injection amount is limited by the maximum fuel injection amount, and the command fuel injection amount is set.

When ***tQf1>Qf-max***, ***iQf=Qf-max*** and
*when*

$$tQf1 \leqq Qf\text{-}max,\ iQf=tQf1 \qquad (8)$$

where, in equation (8),
***tQf1*** = first target fuel injection amount **[mg/st]**
***Qf-max*** = maximum fuel injection amount **[mg/st]**
***iQf*** = command fuel injection amount **[mg/st].**

The fuel injection amount control means 6-5 controls the energization time of the injector 102 so that the actual fuel injection amount follows the command fuel injection amount.

Next, the target fresh air intake amount setting means 7 of Fig. 2 sets a target intake fresh air amount by an algebraic computation which does not include dynamic delay processing, from the first target drive force, the speed ratio and the engine rotation speed.

The target fresh air intake amount setting means 7 comprises the second target engine torque setting means 7-1, second target fuel injection amount setting means 7-2 and the target fresh air intake amount setting means 7-3, as shown in Fig. 4.

The second target engine torque setting means 7-1 calculates the following equation (9) for the second target engine torque ***tTe2*** as an engine torque required to realize first target drive force ***tFd1*.**

This equation (9) is derived from the above mentioned equation (1).

$$tTe2=(tFd1 \times Rtire)/(G \times Gf) \qquad (9)$$

where, in equation (9),
**t*Te2*** = second target engine torque **[Nm]**
***tFd1=*** first target drive force **[N]**
***Rtire*** = drive wheel effective radius **[m]**
***G*** = speed ratio of CVT
***Gf*** = reduction ratio of final reduction gear.
Here, ***Rtire*** × ***Gf*** is given as a constant.

The second target fuel injection amount setting means 7-2 sets the second target fuel injection amount ***tQf2*** from the second target engine torque and engine rotation speed.

The relation between the second target engine torque, engine rotation speed and second target fuel injection amount is prepared beforehand as a map. An example of the map which sets the second target fuel injection amount is shown in Fig. 8, and the map settings are identical values to those of Fig. 6. The second target fuel injection amount is not a target value of the actual fuel injection amount, but is calculated as a parameter for setting the target fresh air intake amount.

The target fresh air intake amount setting means 7-3 sets a target intake fresh air amount from the second target fuel injection amount and engine rotation speed. The relation between the second target fuel injection amount, engine rotation speed and target fresh air intake amount is prepared beforehand as a map. An example of the map which sets the target fresh air intake amount is shown in Fig. 9.

The target fresh air intake amount may be set from the second target engine torque and engine rotation speed. In this case, the second target fuel injection amount setting means 7-2 is unnecessary.

Again, in Fig. 2, the intake fresh air amount control means 8 controls the opening of the EGR valve 105 so that the actual fresh air intake follows the target intake fresh air amount. The characteristics of the EGR valve opening relative to the target fresh air amount are shown in Fig. 10. If the opening of the EGR valve 105 is made small, the exhaust gas recirculation amount will become less, and the fresh air intake amount will increase.

Therefore, in this first embodiment, dynamic delay processing is performed on the first target drive force to set the second target drive force. Although the engine torque no longer exceeds an upper limit level even during acceleration, it is necessary to make the fresh air intake amount increase promptly within the limits of the upper limit level of engine torque during such an acceleration. This is because the response of the engine torque to the increase in fuel injection amount increases, the larger the excess air rate. The target fresh air intake amount is set based on the first target drive force and the speed ratio of the CVT107, and does not contain dynamic delay processing here. Therefore, the response of the increase in the fresh air intake amount is accelerated, and the engine torque required for acceleration promptly increases. The fresh air intake amount can also be increased by making the opening of the EGR valve 105 small.

Next, a second embodiment will be described.

The system construction of the vehicle in the case of the second embodiment is the same as that of the first embodiment (Fig. 1).

Fig. 11 is a block diagram of the drive force controller in the case of the second embodiment.

This drive force controller comprises a first target drive force setting means 1, second target drive force setting means 2, speed ratio detection means 3, fresh air intake amount detection means 4, engine speed detection means 5, engine torque control means 6, target EGR rate setting means 9, and EGR rate control means 10. The detailed construction of the target EGR rate setting means 9 is shown in Fig. 12.

The first target drive force setting means 1, second target drive force setting means 2, speed ratio detection means 3, fresh air intake amount detection means 4, engine speed detection means 5 and engine torque control means 6 are identical to what was described in the first embodiment shown in Fig. 2 and Fig. 3. The difference from the first embodiment is that the target intake fresh air amount setting means 7 and the fresh air intake amount control means 8 are replaced by the target EGR rate setting means 9 and the EGR rate control means 10.

In the second embodiment, regarding control of the fresh air intake amount, a target EGR rate is set instead of the target fresh air intake amount, and the intake fresh air intake amount is controlled indirectly. The purpose of the invention is the same as that of the first embodiment, i.e., to enhance the response of the fresh air intake amount relative to an accelerator pedal operation, and thereby improve engine torque controllability and drivability.

Hereafter, the target EGR rate setting means 9 and the EGR rate control means 10 will mainly be described. The target EGR rate setting means 9 sets the target EGR rate by an algebraic operation which does not involve dynamic delay processing from first target drive force, the speed ratio and the engine rotation speed.

The target EGR rate setting means 9 comprises a second target engine torque setting means 7-1, second target fuel injection amount setting means 7-2 and target intake fresh air amount setting means 9-3, as shown in Fig. 12. The second target engine torque setting means 7-1 and the second target fuel injection amount setting means 7-2 are identical to what was described in Fig. 4.

A different point from Fig. 4 is that the target intake fresh air amount setting means 7-3 is replaced by a target EGR rate setting means 9-3.

The target EGR rate setting means 9-3 sets the target EGR rate from the second target fuel injection amount and engine rotation speed.

The relation between the second target fuel injection amount, engine rotation speed and target EGR rate is prepared beforehand as a map. An example of a map which sets this target EGR rate is shown in Fig. 13.

However, the target EGR rate can also be set from the second target engine torque and engine rotation speed. In this case, the second target fuel injection amount setting means 7-2 becomes unnecessary.

The EGR rate control means 10 controls the opening of the EGR valve 105 so that the actual EGR rate follows the target EGR rate. The characteristics of the EGR valve opening relative to the target EGR rate are shown in Fig. 14.

Therefore, according to this second embodiment, as the EGR rate for determining an EGR amount having a correlation with the fresh air intake amount is computed without including dynamic response processing, the intake air amount can be controlled with sufficient response by controlling the EGR rate to the target EGR rate. As a result, the fuel injection amount can be increased with sufficient response during acceleration.

Next, a third embodiment will be described.

Fig. 15 is a system diagram of the vehicle in the case of the third embodiment.

As shown in Fig. 15, a supercharger 106 is provided in the engine 100 wherein a compressor on the intake air side is rotated by an exhaust gas turbine. This supercharger 106 is a variable capacity type, the supercharging pressure being controlled by varying the opening of a nozzle as a component of a throttle on the upstream side of the turbine.

Therefore, the intake air amount is controlled by changing this supercharging pressure.

The drive force controller 200 performs fuel injection control on the injector 102, and supercharging pressure control (nozzle opening control) on the supercharger 106 for drive force control.

Fig. 16 is a block diagram of the drive force controller.

The drive force controller comprises the first target drive force setting means 1, second target drive force setting means 2, speed ratio detection means 3, fresh air intake amount detection means 4, engine speed detection means 5, engine torque control means 6, target supercharging pressure setting means 11 and supercharging pressure control means 12.

The detailed construction of the target supercharging pressure setting means 11 in the diagram is shown in Fig. 17.

Here, the first target drive force setting means 1, second target drive force setting means 2, speed ratio detection means 3, fresh air intake amount detection means 4, engine speed detection means 5 and engine torque control means 6 are identical to what was described in Fig. 2 and Fig. 3.

Unlike the first embodiment, the target intake fresh air amount setting means 7 and intake fresh air amount operation means 8 are replaced by a target supercharging pressure setting means 11 and a supercharging pressure control means 12.

For control of the fresh air intake amount, this third embodiment controls the intake fresh air amount indirectly by setting not the target fresh air intake amount but the target supercharging pressure, and controlling the supercharging pressure. In this case also, engine torque controllability and drivability are improved by accelerating the response of the fresh air intake amount to accelerator pedal operation.

The target supercharging pressure setting means 11 and the supercharging pressure control means 12 will now be mainly described.

The target supercharging pressure setting means 11 sets the target supercharging pressure by an algebraic operation which does not contain dynamic delay processing from the first target drive force, the speed ratio and the engine rotation speed.

The target supercharging pressure setting means 11 comprises the second target engine torque setting means 7-1, second target fuel injection amount setting means 7-2 and target supercharging pressure setting means 11-3, as shown in Fig. 17.

The second target engine torque setting means 7-1 and second target fuel injection amount setting means 7-2 are identical to what was described in Fig. 4.

The difference from the first embodiment is that the target intake fresh air amount setting means 7-3 is replaced by the target supercharging pressure setting means 11-3. The target supercharging pressure setting means 11-3 sets the target supercharging pressure from the second target fuel injection amount and engine rotation speed.

The relation between the second target fuel injection amount, engine rotation speed and target supercharging pressure is prepared beforehand as a map. An example of a map which sets the target supercharging pressure is shown in Fig. 18.

However, the target supercharging pressure can also be set from the second target engine torque and engine rotation speed. In this case, the second target fuel injection amount setting means 7-2 is unnecessary. The supercharging pressure control means 12 controls the nozzle opening of the supercharger 106 so that the actual supercharging pressure follows the target supercharging pressure.

The characteristics of the supercharger nozzle opening relative to the target supercharging pressure are shown in Fig. 19.

When a variable type of supercharger is not provided, the opening of the EGR valve 105 may be controlled so that the actual supercharging pressure follows the target supercharging pressure. The system construction in this case is identical to that of Fig. 1.

The effectiveness of this technical teaching is shown in Fig. 20 by comparison with the prior art. This diagram shows the characteristics of the first embodiment, but an identical effect is obtained with the second and third embodiment.

In this technical teaching, the target fresh air intake amount can be made to increase rapidly simultaneously with the accelerator pedal depression, and the response of the fresh air intake amount to an accelerator pedal operation is enhanced. Due to the faster response of the fresh air intake amount, the appearance of the upper limiting level of engine torque determined by the maximum fuel injection amount can be made more rapid. Consequently, compared with the prior art, the restriction on the target engine torque (equivalent to the first target engine torque in this invention) decreases, and the ability to follow the target value of drive force improves as shown by the second target engine torque.

## Claims

**1.** A drive force controller for a vehicle provided with a diesel engine (100) and a transmission (107), the transmission changes an output rotation of the engine, the controller comprising:

a sensor (201) which detects an accelerator pedal operation amount of the engine,
a sensor (202) which detects a fresh air amount drawn in by the engine,
a sensor (203) which detects an engine rotation speed,
a sensor (204) which detects a speed ratio of the transmission,
a fresh air intake amount control device (104,105,106), and
a controller (200) functioning to:

calculate a first target drive force based on the operation amount of the accelerator pedal,
apply dynamic delay processing to the first target drive force to calculate a second target drive force,
calculate a target engine fresh air intake amount from the first target drive force, the speed ratio and the engine rotation speed,
control a fresh air intake amount of the engine by controlling the fresh air intake amount control device (104,105,106) to this target fresh air intake amount,
control a torque of the engine based on the second target drive force, the speed ratio, the fresh air intake amount and the engine rotation speed.

**2.** The drive force controller as defined in Claim 1, wherein the controller (200) functions for controlling the engine torque to:

compute a first target engine torque from the second target drive force and the speed ratio,
compute a first target fuel injection amount from the first target engine torque and the engine rotation speed,
compute a maximum fuel injection amount as an upper limit of the fuel injection amount based on a limit on the rich side of the air excess factor from the fresh air intake amount and engine rotation speed,
compute a command value of the fuel injection amount by limiting the first target fuel injection amount to the maximum fuel injection amount, and
control the fuel injection amount according to the command fuel injection amount.

**3.** The drive force controller as defined in Claim 1, wherein the controller (200) functions for computing the target fresh air intake amount to:

compute a second target engine torque from the first target drive force and the speed ratio,
compute a second target fuel injection amount from the second target engine torque and the engine rotation speed, and
compute the target fresh air intake amount from the second target fuel injection amount and the engine rotation speed.

**4.** The drive force controller as defined in Claim 1, wherein the fresh air intake amount control device is an exhaust gas recirculation device (104,105) and the controller (200) functioning to:

calculate the target engine fresh air intake amount by computing a target exhaust gas recirculation rate from the first target drive force, the speed ratio and the engine rotation speed,
control the fresh air intake amount of the engine to this target fresh air intake amount by controlling the exhaust gas recirculation rate of the exhaust gas recirculation device to obtain this target exhaust gas recirculation rate.

**5.** The drive force controller as defined in Claim 4, wherein the controller (200) functions for computing the target exhaust gas recirculation rate to:

compute a second target engine torque from the first target drive force and the speed ratio,
compute a second target fuel injection amount from the second target engine torque and the engine rotation speed, and
compute the target exhaust gas recirculation rate from the second target fuel injection amount and the engine rotation speed.

**6.** The drive force controller as defined in Claim 1, wherein the fresh air intake amount control device is an engine supercharger (106) and the controller (200) functioning to:

calculate the target engine fresh air intake amount by computing a target supercharging pressure from the first target drive force, the speed ratio and the engine rotation speed
control the fresh air intake amount of the engine to this target fresh air intake amount by controlling the supercharging pressure of the supercharger to obtain this target supercharging pressure.

**7.** The drive force controller as defined in Claim 6, wherein:

the controller (200) functions for computing the target supercharging pressure to:

compute a second target engine torque from the first target drive force and the speed ratio,
compute a second target fuel injection amount from the second target engine torque and the engine rotation speed, and
compute the target supercharging pressure from the second target fuel injection amount and the engine rotation speed.

## Patentansprüche

**1.** Antriebskraftsteuereinrichtung für ein Fahrzeug, versehen mit einem Dieselmotor (100) und einem Getriebe (107), wobei das Getriebe eine Ausgangsdrehung des Motors verändert, wobei die Steuereinrichtung aufweist:

einen Sensor (201), der eine Beschleunigerpedal- Betätigungsgröße des Motors erfasst,
einen Sensor (202), der eine durch den Motor angesaugte Frischluftmenge erfasst,
einen Sensor (203), der eine Motordrehzahl erfasst,
einen Sensor (204), der ein Übersetzungsverhältnis des Getriebes erfasst,
eine Frischlufteinlassmengen- Steuervorrichtung (104, 105, 106) und
eine Steuereinrichtung (200), die funktioniert zum:

Berechnen einer ersten Ziel- Antriebskraft auf der Grundlage der Betätigungsgröße des Beschleunigerpedals,
Anwenden einer dynamischen Verzögerungsverarbeitung auf die erste Ziel- Antriebskraft, um eine zweite Ziel- Antriebskraft zu berechnen,
Berechnen einer Ziel- Motorfrischlufteinlassmenge aus der ersten Ziel- Antriebskraft, dem Übersetzungsverhältnis und der Motordrehzahl,
Steuern einer Frischlufteinlassmenge des Motors durch Steuern der Frischlufteinlassmengen- Steuervorrichtung (104, 105, 106) auf diese Ziel- Frischlufteinlassmenge,
Steuern eines Drehmomentes des Motors auf der Grundlage der zweiten Ziel- Antriebskraft, dem Übersetzungsverhältnis, der Frischlufteinlassmenge und der Motordrehzahl.

**2.** Antriebskraftsteuereinrichtung nach Anspruch 1, wobei die Steuerung (200) für das Steuern des Motordrehmomentes funktioniert, zum:

Berechnen eines ersten Ziel- Motordrehmomentes aus der zweiten Ziel- Antriebskraft und dem Übersetzungsverhältnis,
Berechnen einer ersten Ziel- Kraftstoffeinspritzmenge aus dem ersten Ziel- Motordrehmoment und der Motordrehzahl,
Berechnen einer maximalen Kraftstoffeinspritzmenge als eine obere Grenze der Kraftstoffeinspritzmenge auf der Grundlage einer Grenze auf der fetten Seite des Luftüberschussfaktors aus der Frischlufteinlassmenge und der Motordrehzahl, Berechnen eines Befehlswertes der Kraftstoffeinspritzmenge durch Begrenzen der ersten Ziel- Kraftstoffeinspritzmenge auf die maximale Kraftstoffeinspritzmenge, und
Steuern der Kraftstoffeinspritzmenge entsprechend der Befehls- Kraftstoffeinspritzmenge.

**3.** Antriebskraftsteuereinrichtung nach Anspruch 1, wobei die Steuerung (200) für das Berechnen der Ziel- Frischlufteinlassmenge funktioniert, zum:

Berechnen eines zweiten Ziel- Motordrehmomentes aus der ersten Ziel- Antriebskraft und dem Übersetzungsverhältnis,
Berechnen einer zweiten Ziel- Kraftstoffeinspritzmenge aus dem zweiten Ziel- Motordrehmoment und der Motordrehzahl, und
Berechnen der Ziel- Frischlufteinlassmenge aus der zweiten Ziel- Kraftstoffeinspritzmenge und der Motordrehzahl.

**4.** Antriebskraftsteuereinrichtung nach Anspruch 1, wobei die Frischlufteinlassmengen- Steuervorrichtung eine Abgasrückführungsvorrichtung (104, 105) ist und die Steuerung (200) funktioniert zum:

Berechnen der Ziel- Frischlufteinlassmenge des Motors durch Berechnen einer Ziel- Abgasrückführungsrate aus der ersten Ziel- Antriebskraft, dem Übersetzungsverhältnis und der Motordrehzahl,
Steuern der Frischlufteinlassmenge des Motors auf diese Ziel- Frischlufteinlassmenge durch Steuern der Abgasrückführungsrate der Abgasrückführungsvorrichtung, um diese Ziel- Abgasrückführungsrate zu erreichen.

**5.** Antriebskraftsteuereinrichtung nach Anspruch 4, wobei die Steuerung (200) für das Berechnen der Ziel- Abgasrückführungsrate funktioniert, zum:

Berechnen eines zweiten Ziel- Motordrehmomentes aus der ersten Ziel- Antriebskraft und dem Drehzahlverhältnis,
Berechnen einer zweiten Ziel- Kraftstoffeinspritzmenge aus dem zweiten Ziel- Motordrehmoment, und der Motordrehzahl, und

Berechnen der Ziel- Abgasrückführungsrate aus der zweiten Ziel- Kraftstoffeinspritzmenge und der Motordrehzahl.

**6.** Antriebskraftsteuereinrichtung nach Anspruch 1, wobei die Frischlufteinlassmengen- Steuervorrichtung ein Motor-Turbolader (106) ist und die Steuerung (200) funktioniert zum:

Berechnen der Ziel- Frischlufteinlassmenge des Motors durch Berechnen des Ziel- Aufladedrucks aus der ersten Ziel- Antriebskraft, dem Übersetzungsverhältnis und der Motordrehzahl,
Steuern der Frischlufteinlassmenge des Motors auf diese Ziel- Frischlufteinlassmenge durch Steuern des Aufladedruckes des Turboladers, um diesen Ziel- Aufladedruck zu erhalten.

**7.** Antriebskraftsteuereinrichtung nach Anspruch 1, wobei:

die Steuerung (200) funktioniert, um den Ziel- Aufladedruck zu berechnen, zum:

Berechnen eines Ziel- Motordrehmomentes aus der ersten Ziel- Antriebskraft und dem Übersetzungsverhältnis,
Berechnen einer zweiten Ziel- Kraftstoffeinspritzmenge aus dem zweiten Ziel- Motordrehmoment und der Motordrehzahl, und
Berechnen des Ziel- Aufladedrucks aus der zweiten Ziel- Kraftstoffeinspritzmenge und der Motordrehzahl.

## Revendications

**1.** Contrôleur de force d'entraînement pour un véhicule muni d'un moteur diesel (100) et d'une transmission (107), la transmission faisant varier une rotation de sortie du moteur, le contrôleur comprenant :

un capteur (201) qui détecte une ampleur d'actionnement d'une pédale d'accélérateur du moteur,
un capteur (202) qui détecte une quantité d'air frais tiré par le moteur,
un capteur (203) qui détecte une vitesse de rotation de moteur,
un capteur (204) qui détecte un rapport de vitesses de la transmission,
un dispositif de commande de quantité d'admission d'air frais (104, 105, 106), et un contrôleur (200) fonctionnant pour :

calculer une première force d'entraînement cible sur la base de l'ampleur d'actionnement de la pédale d'accélérateur,
appliquer un traitement de retard dynamique à la première force d'entraînement cible afin de calculer une seconde force d'entraînement cible,
calculer une quantité d'admission d'air frais de moteur cible à partir de la première force d'entraînement cible, du rapport de vitesses et de la vitesse de rotation du moteur,
commander une quantité d'admission d'air frais du moteur en commandant le dispositif de commande de quantité d'admission d'air frais (104, 105, 106) à cette quantité d'admission d'air frais cible,
commander un couple du moteur sur la base de la seconde force d'entraînement cible, du rapport de vitesses, de la quantité d'admission d'air frais et de la vitesse de rotation de moteur.

**2.** Contrôleur de force d'entraînement selon la revendication 1, dans lequel le contrôleur (200) fonctionne pour commander le couple de moteur afin de :

calculer un premier couple de moteur cible à partir de la seconde force d'entraînement cible et du rapport de vitesses,
calculer une première quantité d'injection de carburant cible à partir du premier couple de moteur cible et de la vitesse de rotation de moteur,
calculer une quantité d'injection de carburant maximale en tant que limite supérieure de la quantité d'injection de carburant sur la base d'une limite du côté riche du facteur d'excès d'air à partir de la quantité d'admission d'air frais et de la vitesse de rotation de moteur,
calculer une valeur prescrite de la quantité d'injection de carburant en limitant la première quantité d'injection de carburant cible à la quantité d'injection de carburant maximale, et
commander la quantité d'injection de carburant en fonction de la quantité d'injection de carburant prescrite.

**3.** Contrôleur de force d'entraînement selon la revendication 1, dans lequel le contrôleur (200) fonctionne pour calculer la quantité d'admission d'air frais cible afin de :

calculer un second couple de moteur cible à partir de la première force d'entraînement cible et du rapport de vitesses,
calculer une seconde quantité d'injection de carburant cible à partir du second couple de moteur et de la vitesse de rotation de moteur, et
calculer la quantité d'admission d'air frais cible à partir de la seconde quantité d'injection de carburant cible et de la vitesse de rotation de moteur.

**4.** Contrôleur de force d'entraînement selon la revendication 1, dans lequel le dispositif de commande de quantité d'admission d'air frais est un dispositif de recirculation de gaz d'échappement (104, 105) et le contrôleur (200) fonctionnant pour :

calculer la quantité d'admission d'air frais de moteur cible en calculant un taux de recirculation de gaz d'échappement cible à partir de la première force d'entraînement cible, du rapport de vitesses et de la vitesse de rotation de moteur,
commander la quantité d'admission d'air frais à cette quantité d'admission d'air frais cible en commandant le taux de recirculation de gaz d'échappement du dispositif de recirculation de gaz d'échappement afin d'obtenir ce taux de recirculation de gaz d'échappement cible.

**5.** Contrôleur de force d'entraînement selon la revendication 4, dans lequel le contrôleur (200) fonctionne pour calculer le taux de recirculation de gaz d'échappement cible afin de :

calculer un second couple de moteur cible à partir de la première force d'entraînement cible et du rapport de vitesses,
calculer une seconde quantité d'injection de carburant cible à partir du second couple de moteur cible et de la vitesse de rotation de moteur, et
calculer le taux de recirculation de gaz d'échappement cible à partir de la seconde quantité d'injection de carburant cible et de la vitesse de rotation de moteur.

**6.** Contrôleur de force d'entraînement selon la revendication 1, dans lequel le dispositif de commande de quantité d'admission d'air frais est un suralimentateur de moteur (106) et le contrôleur (200) fonctionnant pour :

calculer la quantité d'admission d'air frais de moteur cible en calculant une pression de suralimentation cible à partir de la première force d'entraînement cible, du rapport de vitesses et de la vitesse de rotation de moteur,
commander la quantité d'admission d'air frais du moteur à cette quantité d'admission d'air frais cible en commandant la pression de suralimentation du suralimentateur afin d'obtenir cette pression de suralimentation cible.

**7.** Contrôleur de force d'entraînement selon la revendication 6, dans lequel :

le contrôleur (200) fonctionne pour calculer la pression de suralimentation cible afin de :

calculer un second couple de moteur cible à partir de la première force d'entraînement cible et du rapport de vitesses,
calculer une seconde quantité d'injection de carburant cible à partir du second couple de moteur cible et de la vitesse de rotation de moteur, et
calculer la pression de suralimentation cible à partir de la seconde quantité d'injection de carburant cible et de la vitesse de rotation de moteur.

FIG. 1

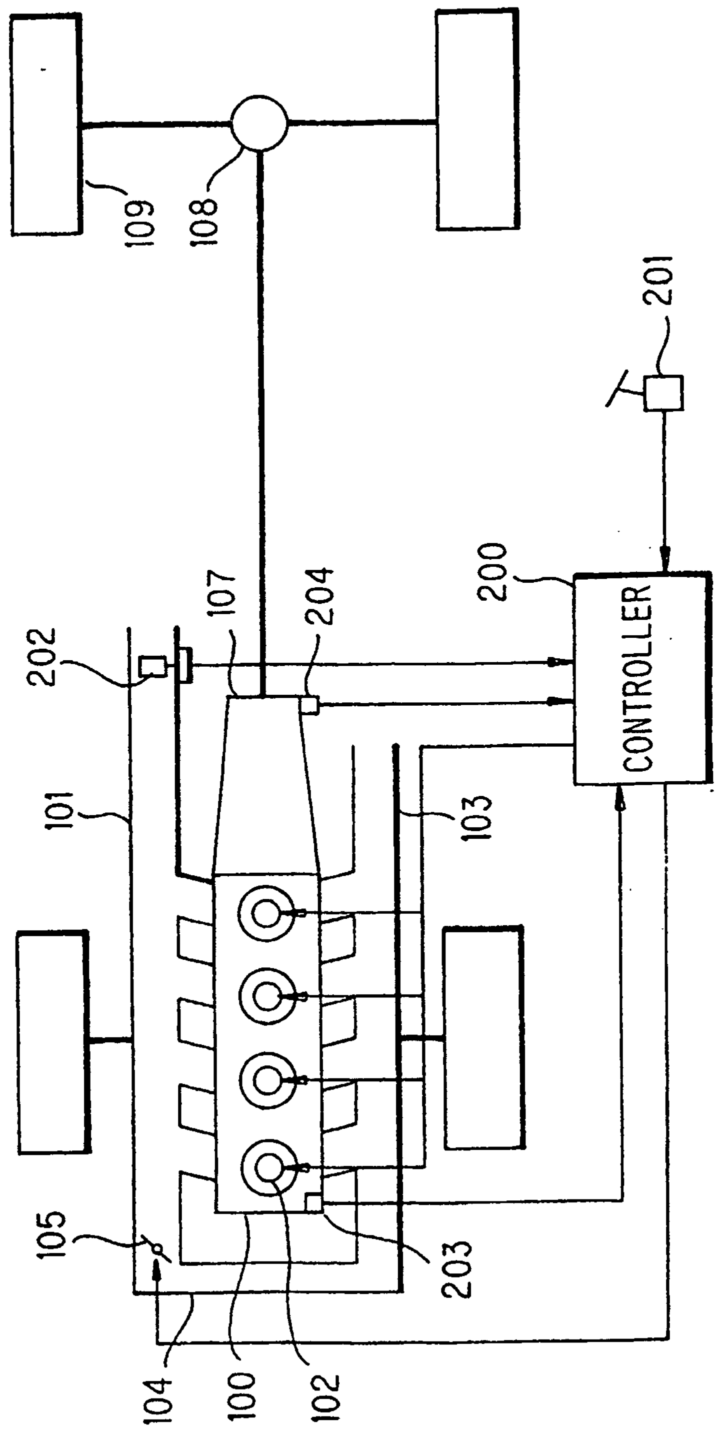
CONTROLLER
100
101
102
103
104
105
107
108
109
200
201
202
203
204

FIG. 2

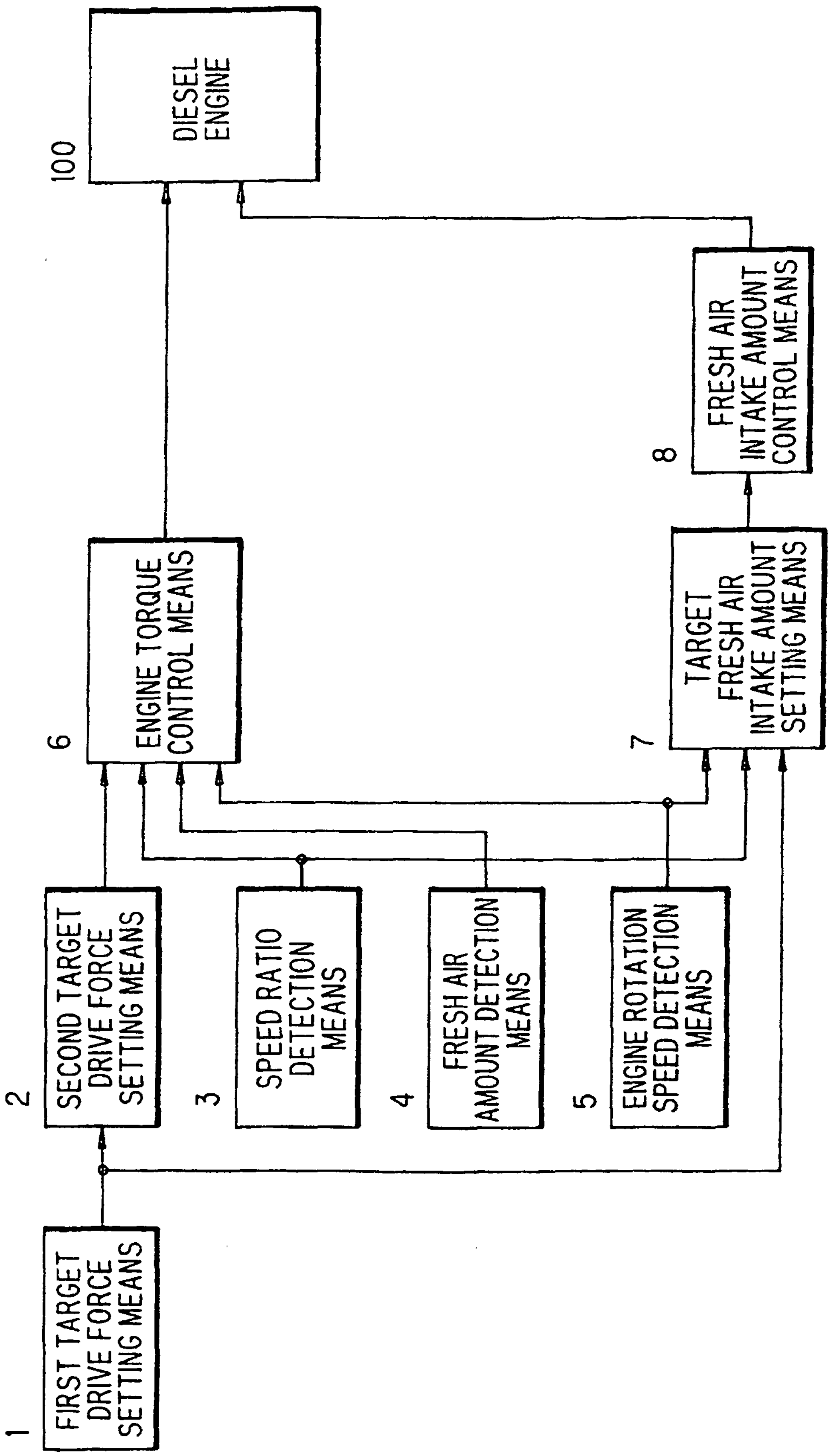
1
FIRST TARGET DRIVE FORCE SETTING MEANS
2
SECOND TARGET DRIVE FORCE SETTING MEANS
3
SPEED RATIO DETECTION MEANS
4
FRESH AIR AMOUNT DETECTION MEANS
5
ENGINE ROTATION SPEED DETECTION MEANS
6
ENGINE TORQUE CONTROL MEANS
7
TARGET FRESH AIR INTAKE AMOUNT SETTING MEANS
8
FRESH AIR INTAKE AMOUNT CONTROL MEANS
100
DIESEL ENGINE

FIG.3

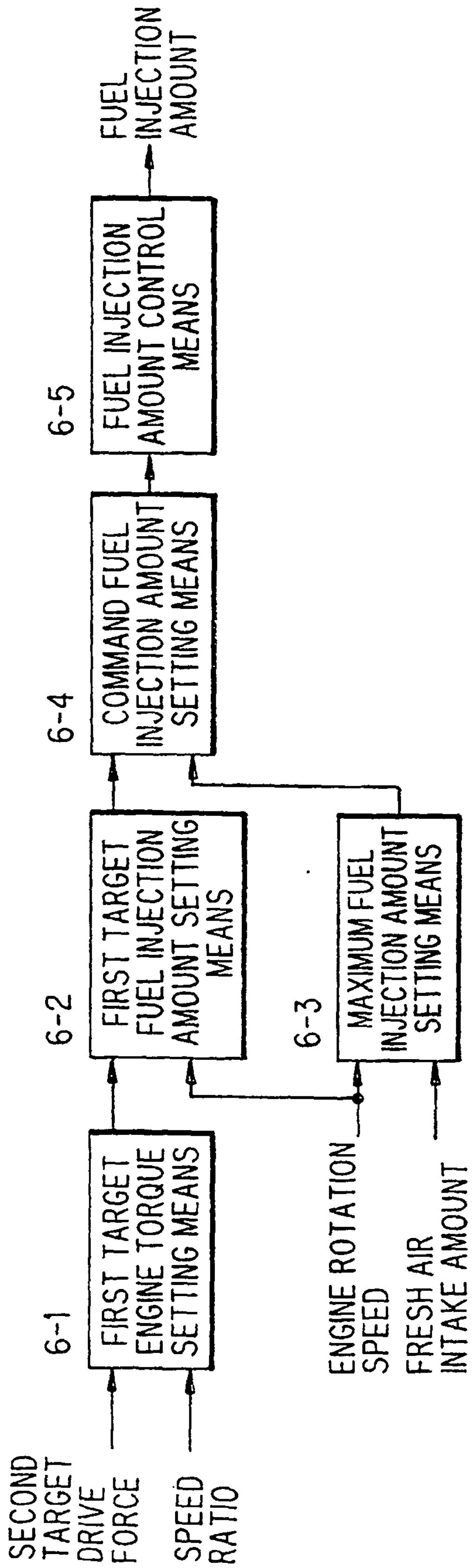
SECOND TARGET DRIVE FORCE
SPEED RATIO
6-1
FIRST TARGET ENGINE TORQUE SETTING MEANS
6-2
FIRST TARGET FUEL INJECTION AMOUNT SETTING MEANS
ENGINE ROTATION SPEED
FRESH AIR INTAKE AMOUNT
6-3
MAXIMUM FUEL INJECTION AMOUNT SETTING MEANS
6-4
COMMAND FUEL INJECTION AMOUNT SETTING MEANS
6-5
FUEL INJECTION AMOUNT CONTROL MEANS
FUEL INJECTION AMOUNT

FIG. 4

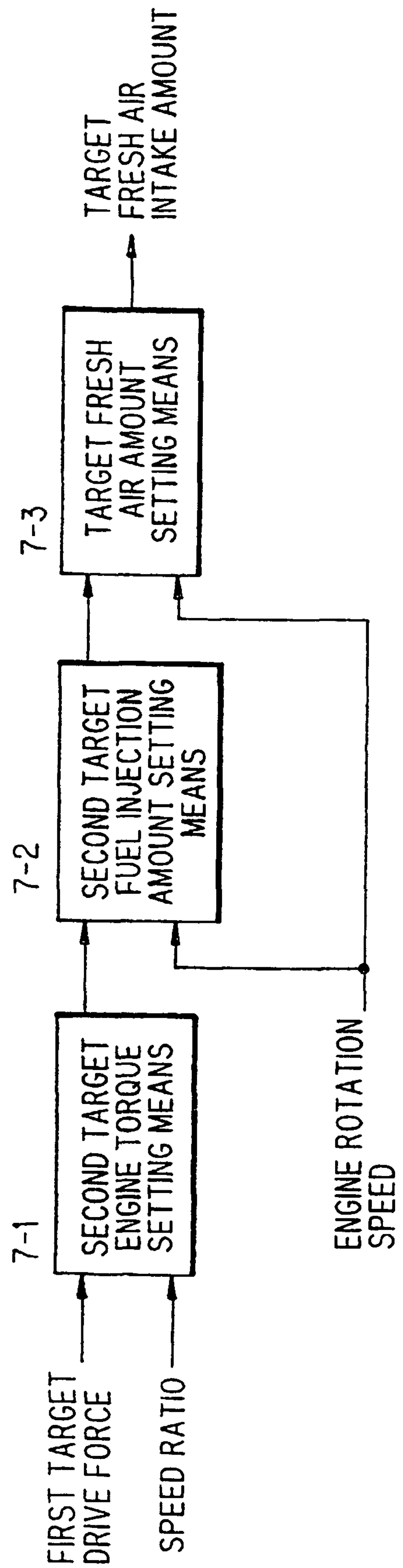
FIRST TARGET DRIVE FORCE
SPEED RATIO
7-1
SECOND TARGET ENGINE TORQUE SETTING MEANS
ENGINE ROTATION SPEED
7-2
SECOND TARGET FUEL INJECTION AMOUNT SETTING MEANS
7-3
TARGET FRESH AIR AMOUNT SETTING MEANS
TARGET FRESH AIR INTAKE AMOUNT

FIG.5

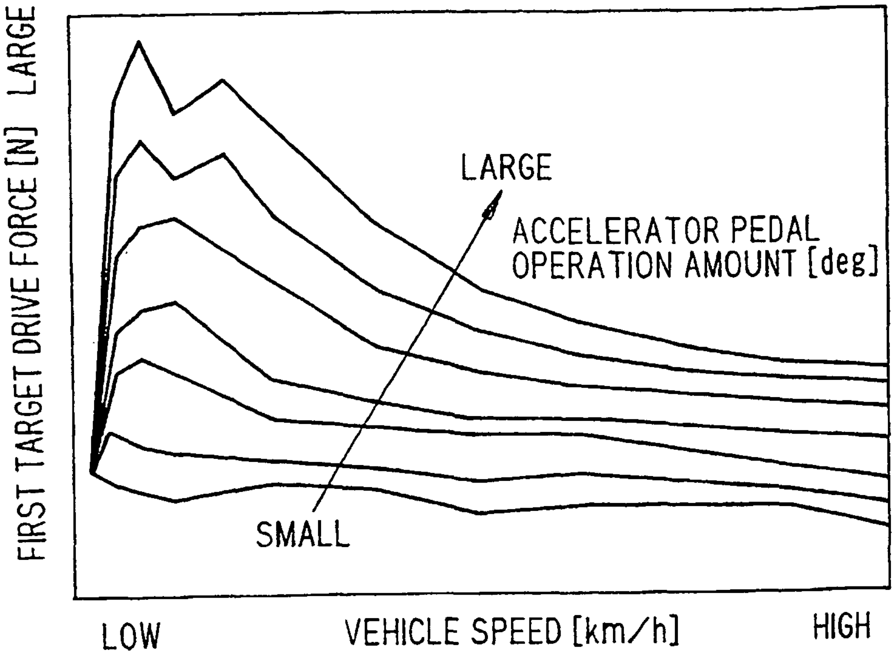
FIRST TARGET DRIVE FORCE [N]
LARGE
LARGE
ACCELERATOR PEDAL
OPERATION AMOUNT [deg]
SMALL
LOW
VEHICLE SPEED [km/h]
HIGH

FIG.6

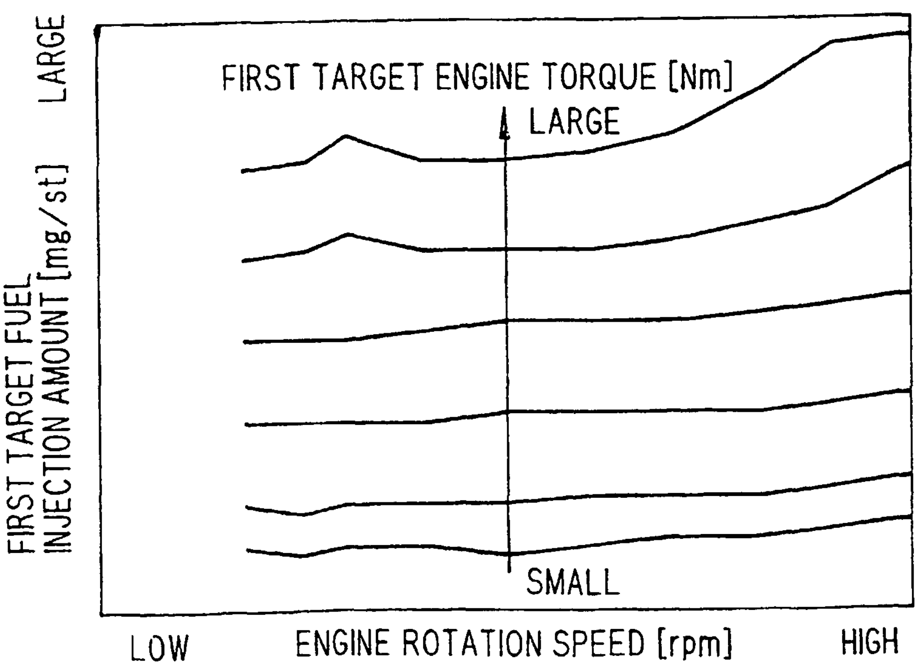
FIRST TARGET FUEL
INJECTION AMOUNT [mg/st]
LARGE
FIRST TARGET ENGINE TORQUE [Nm]
LARGE
SMALL
LOW
ENGINE ROTATION SPEED [rpm]
HIGH

FIG.7

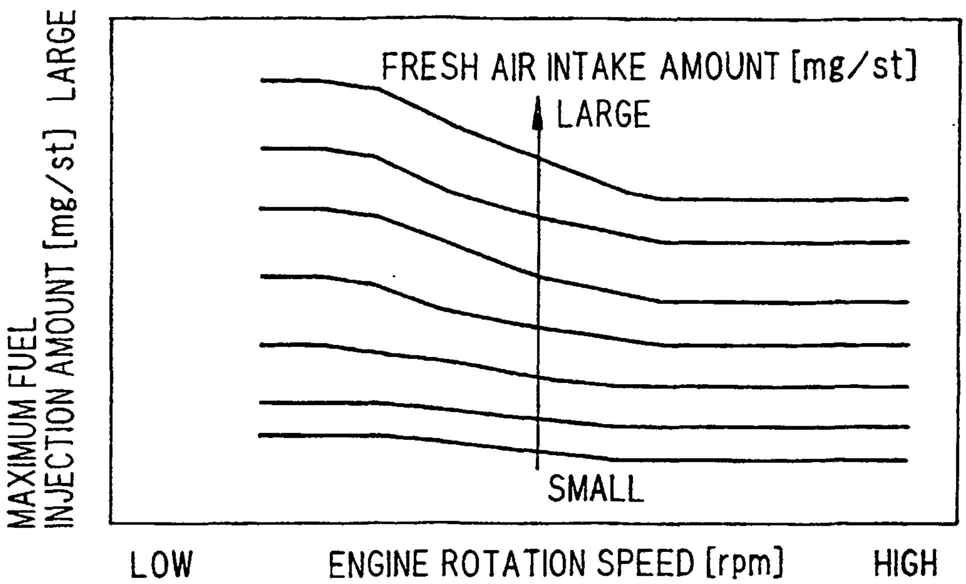
MAXIMUM FUEL INJECTION AMOUNT [mg/st]
LARGE
FRESH AIR INTAKE AMOUNT [mg/st]
LARGE
SMALL
LOW
ENGINE ROTATION SPEED [rpm]
HIGH

FIG.8

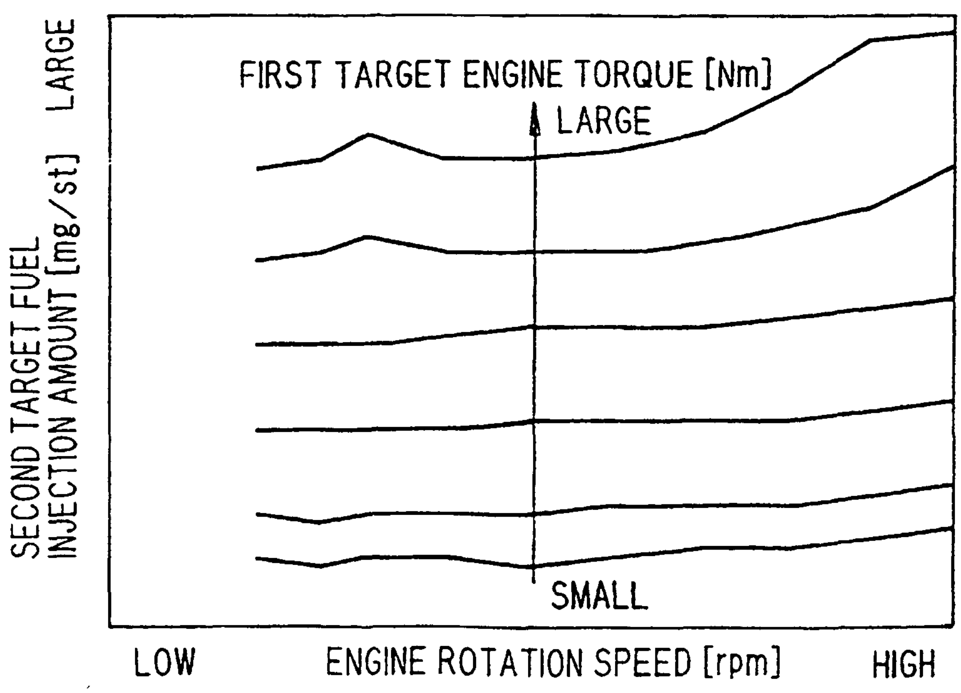
SECOND TARGET FUEL INJECTION AMOUNT [mg/st]
LARGE
FIRST TARGET ENGINE TORQUE [Nm]
LARGE
SMALL
LOW
ENGINE ROTATION SPEED [rpm]
HIGH

FIG.9

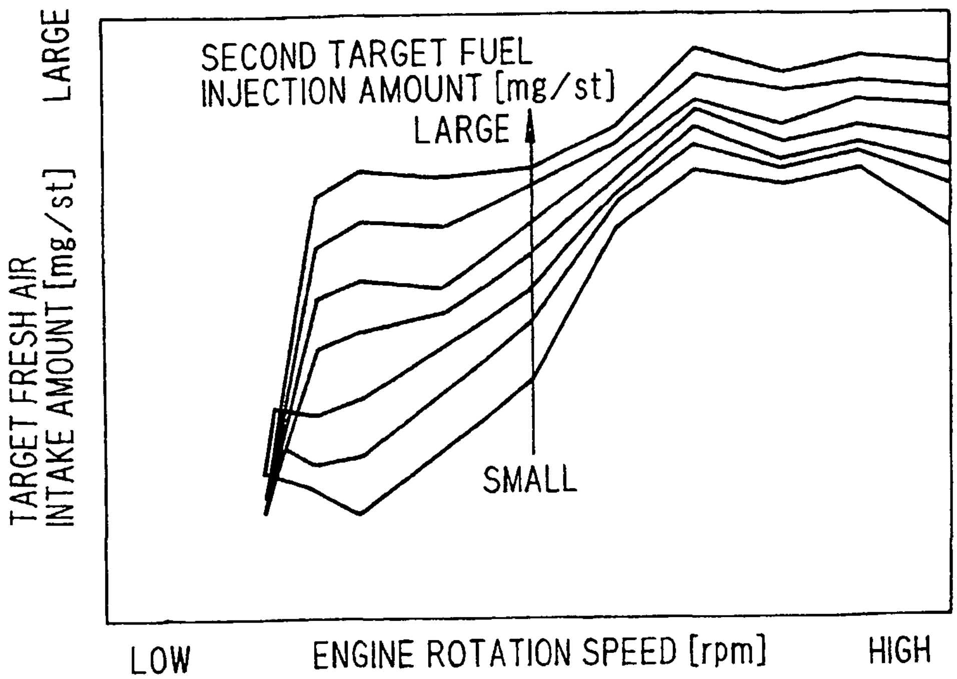
SECOND TARGET FUEL
INJECTION AMOUNT [mg/st]
LARGE
SMALL
TARGET FRESH AIR
INTAKE AMOUNT [mg/st]
LARGE
LOW
ENGINE ROTATION SPEED [rpm]
HIGH

FIG.10

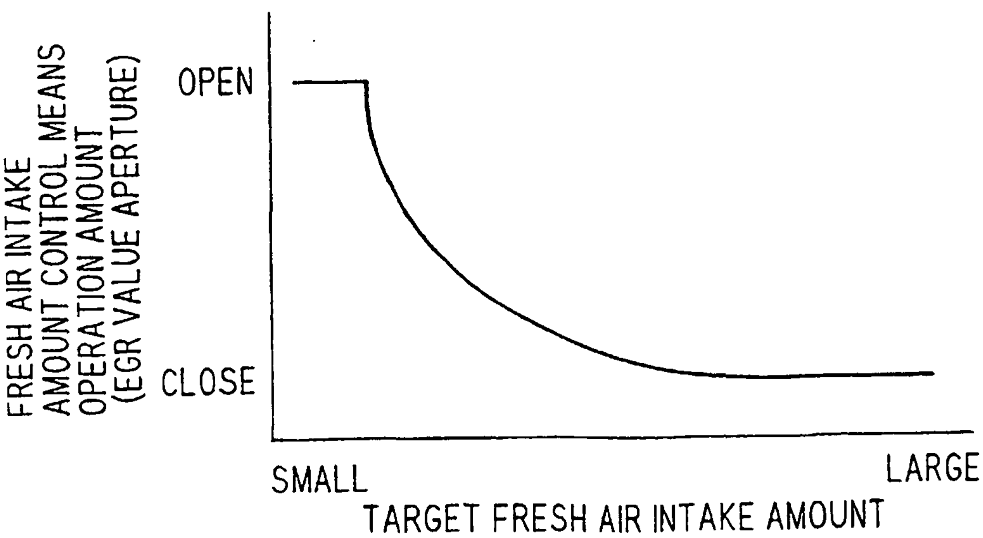
FRESH AIR INTAKE
AMOUNT CONTROL MEANS
OPERATION AMOUNT
(EGR VALUE APERTURE)
OPEN
CLOSE
SMALL
LARGE
TARGET FRESH AIR INTAKE AMOUNT

FIG. 11

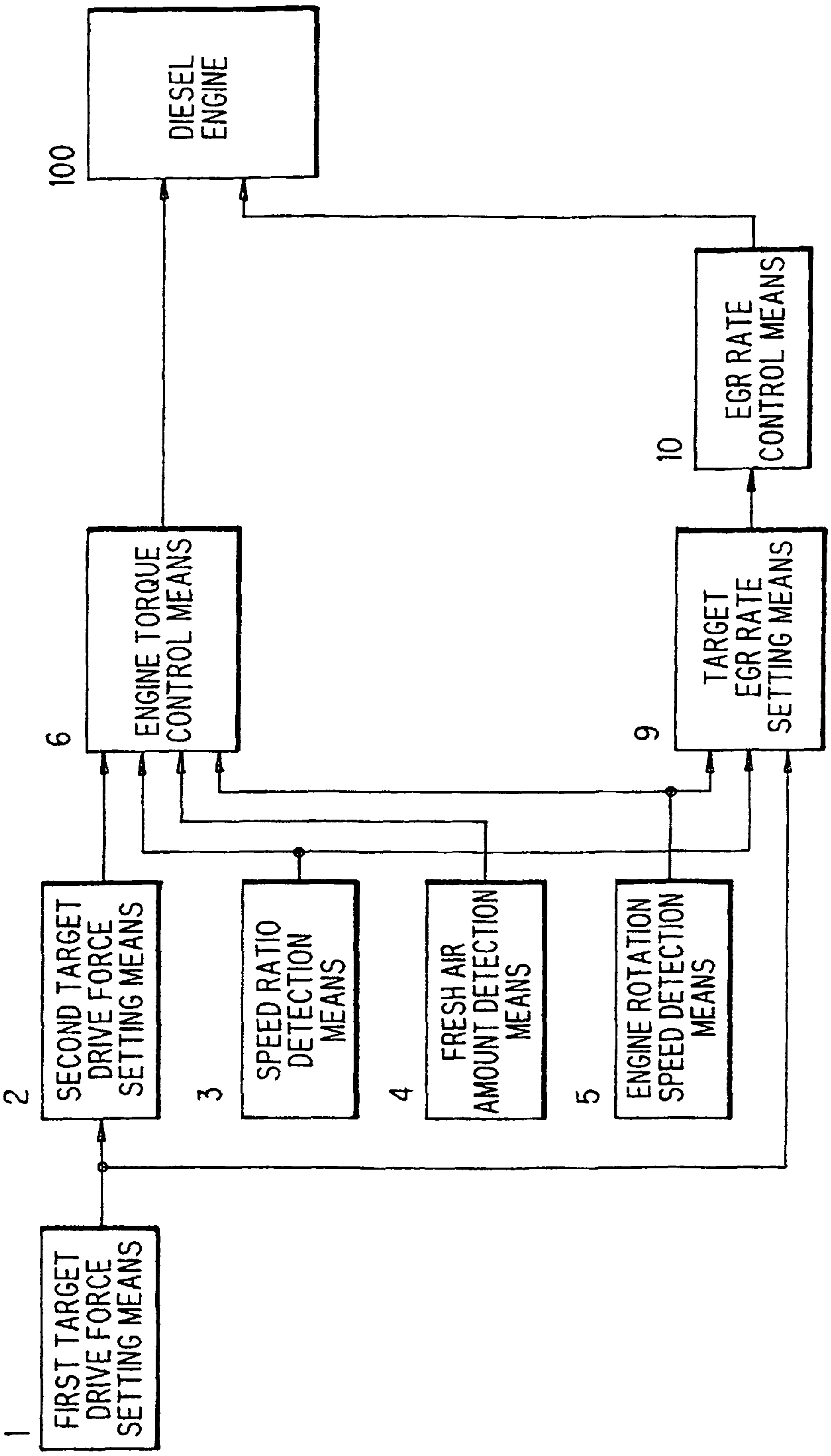
100
DIESEL ENGINE
6
ENGINE TORQUE CONTROL MEANS
10
EGR RATE CONTROL MEANS
9
TARGET EGR RATE SETTING MEANS
1
FIRST TARGET DRIVE FORCE SETTING MEANS
2
SECOND TARGET DRIVE FORCE SETTING MEANS
3
SPEED RATIO DETECTION MEANS
4
FRESH AIR AMOUNT DETECTION MEANS
5
ENGINE ROTATION SPEED DETECTION MEANS

FIG. 12

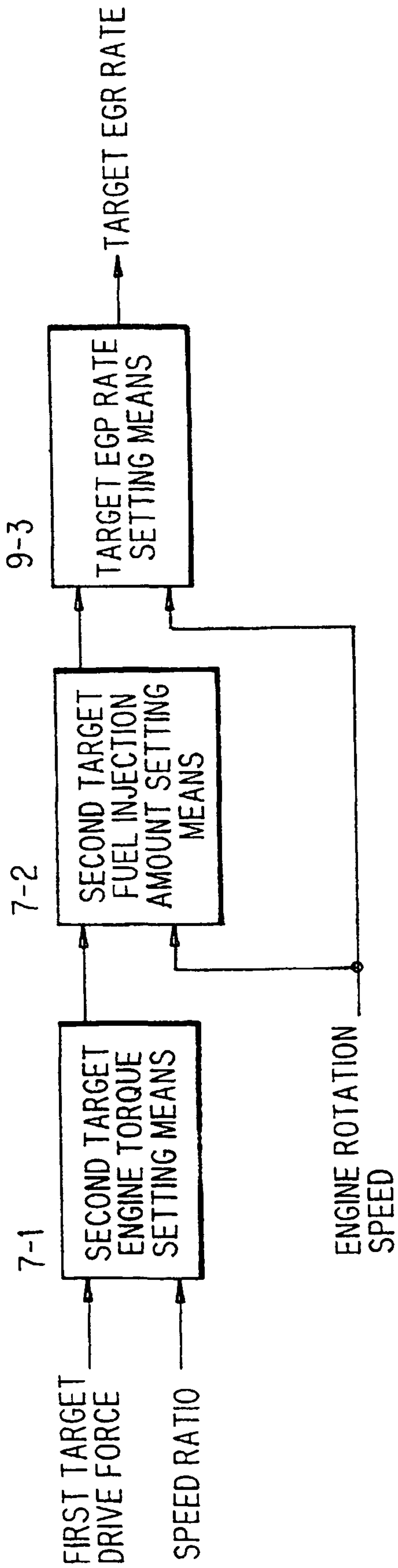
TARGET EGR RATE
9-3
TARGET EGP RATE SETTING MEANS
7-2
SECOND TARGET FUEL INJECTION AMOUNT SETTING MEANS
7-1
SECOND TARGET ENGINE TORQUE SETTING MEANS
ENGINE ROTATION SPEED
FIRST TARGET DRIVE FORCE
SPEED RATIO

FIG. 13

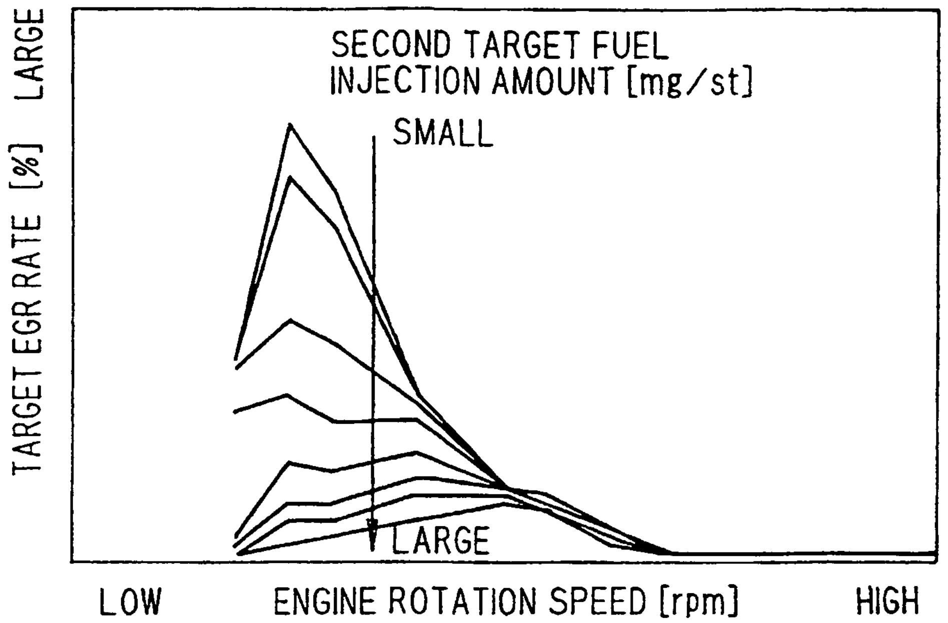
TARGET EGR RATE [%]
LARGE
SECOND TARGET FUEL INJECTION AMOUNT [mg/st]
SMALL
LARGE
LOW
ENGINE ROTATION SPEED [rpm]
HIGH

FIG. 14

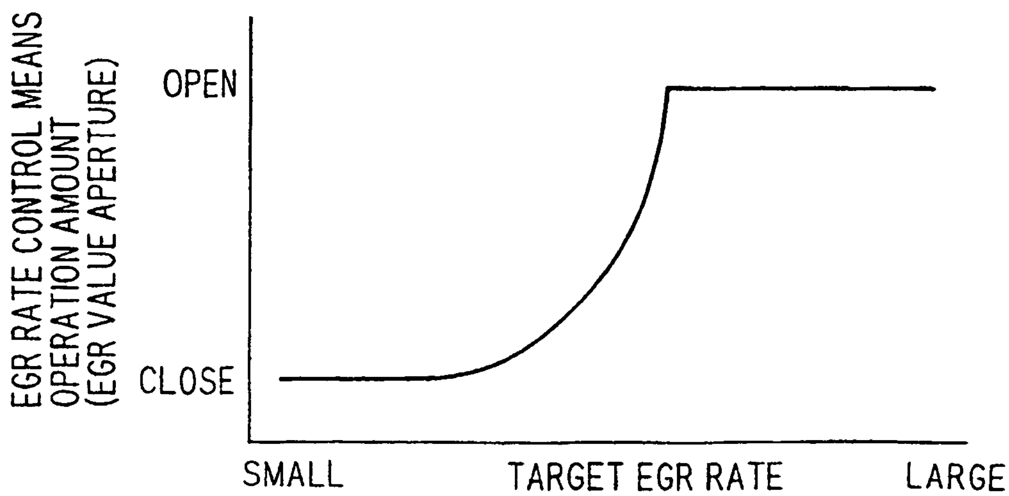
EGR RATE CONTROL MEANS OPERATION AMOUNT (EGR VALUE APERTURE)
OPEN
CLOSE
SMALL
TARGET EGR RATE
LARGE

FIG. 15

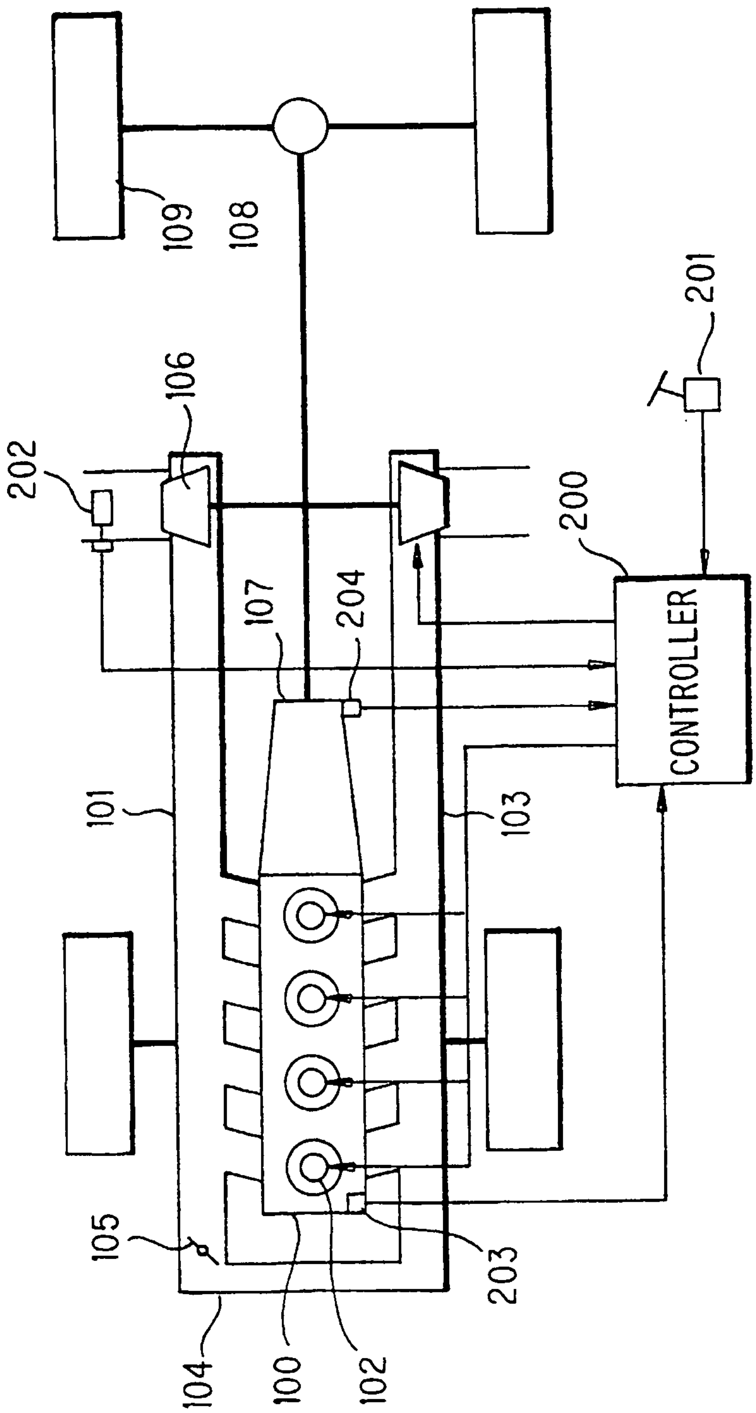
109
108
106
202
201
200
107
204
CONTROLLER
101
103
105
203
104
100
102

FIG. 16

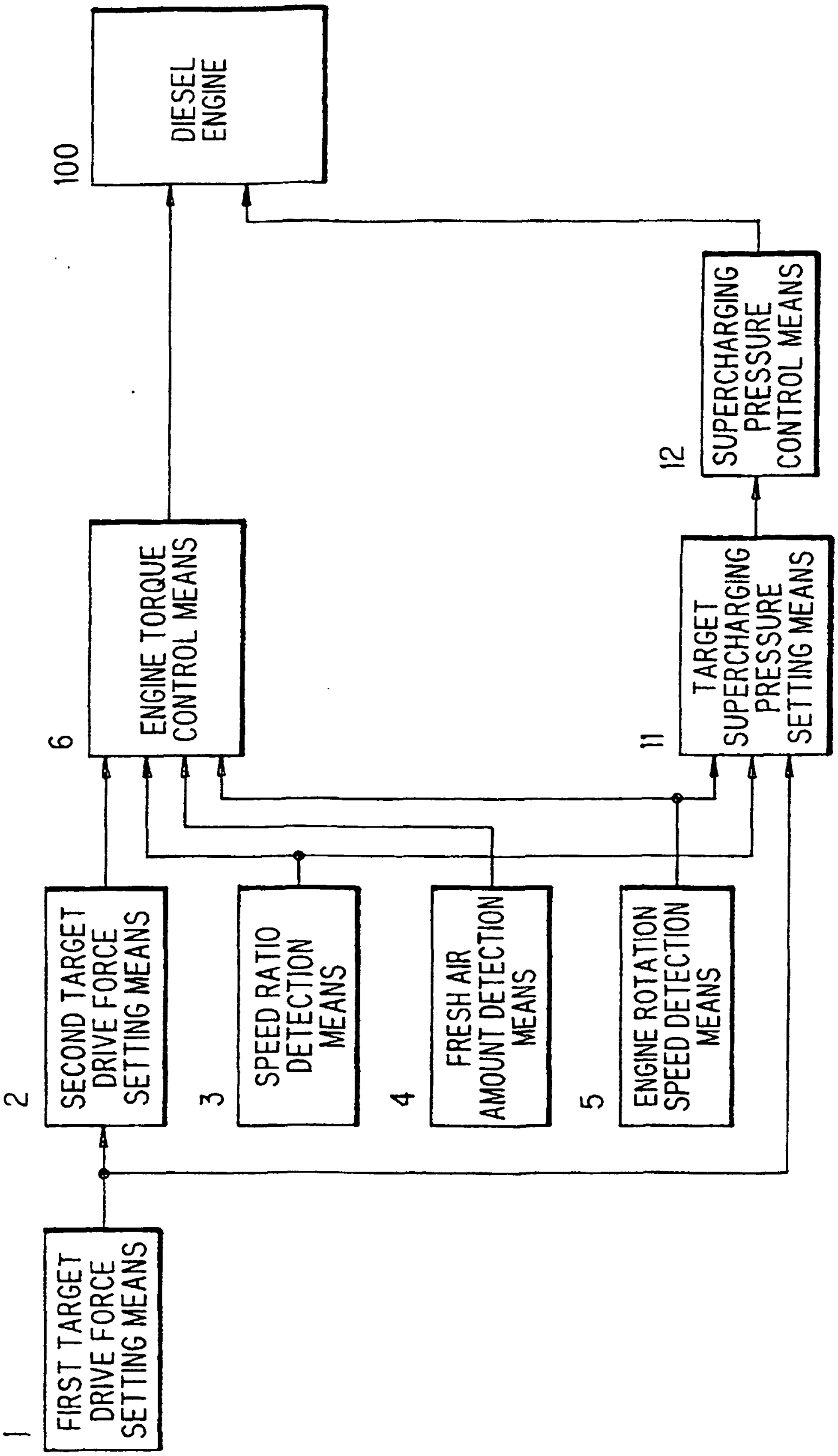
1
FIRST TARGET DRIVE FORCE SETTING MEANS
2
SECOND TARGET DRIVE FORCE SETTING MEANS
3
SPEED RATIO DETECTION MEANS
4
FRESH AIR AMOUNT DETECTION MEANS
5
ENGINE ROTATION SPEED DETECTION MEANS
6
ENGINE TORQUE CONTROL MEANS
11
TARGET SUPERCHARGING PRESSURE SETTING MEANS
12
SUPERCHARGING PRESSURE CONTROL MEANS
100
DIESEL ENGINE

FIG. 17

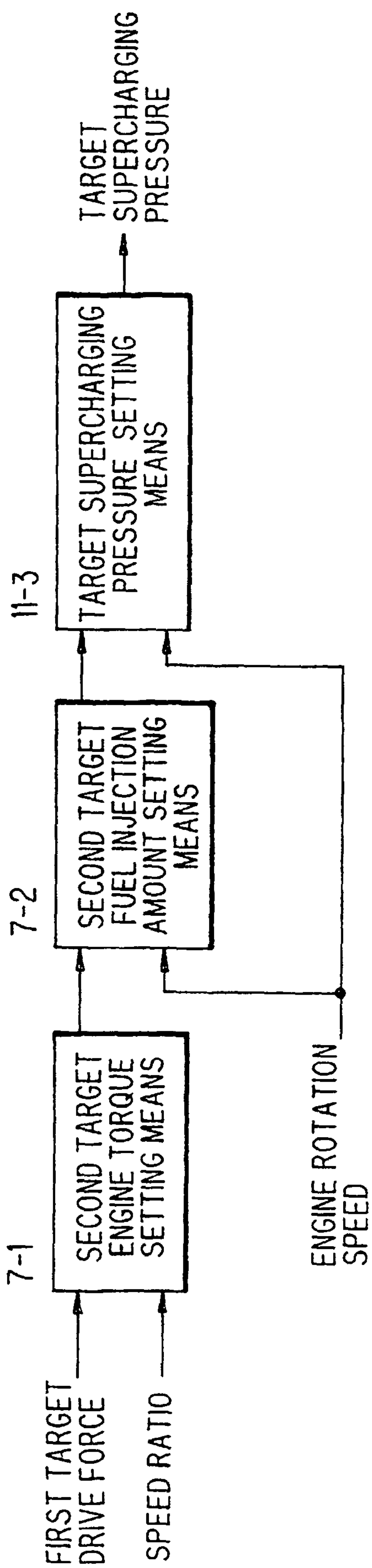
FIRST TARGET DRIVE FORCE
SPEED RATIO
7-1
SECOND TARGET ENGINE TORQUE SETTING MEANS
7-2
SECOND TARGET FUEL INJECTION AMOUNT SETTING MEANS
11-3
TARGET SUPERCHARGING PRESSURE SETTING MEANS
TARGET SUPERCHARGING PRESSURE
ENGINE ROTATION SPEED

FIG. 18

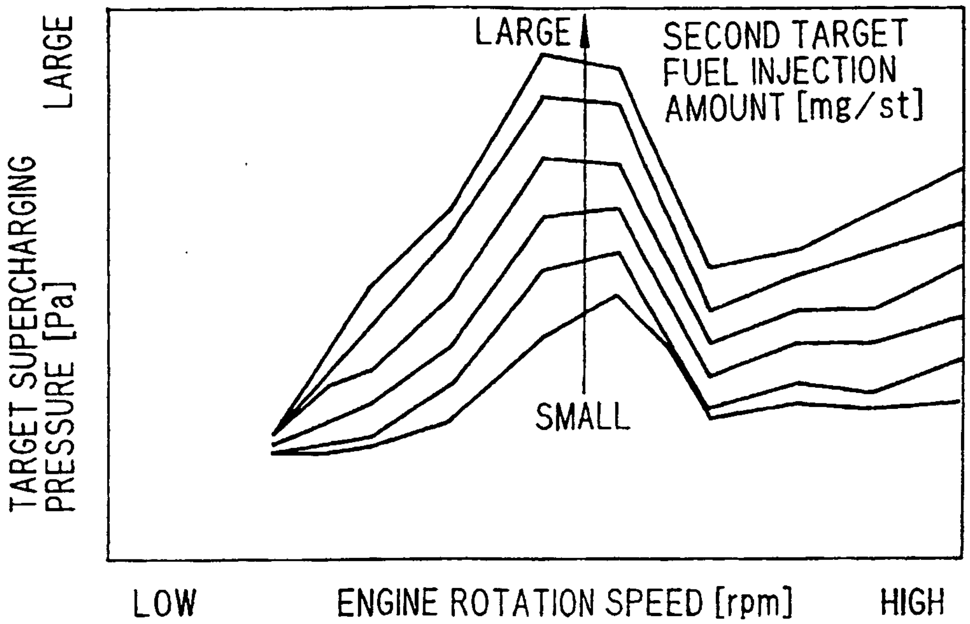
TARGET SUPERCHARGING PRESSURE [Pa]
LARGE
LARGE
SMALL
SECOND TARGET FUEL INJECTION AMOUNT [mg/st]
LOW
ENGINE ROTATION SPEED [rpm]
HIGH

FIG. 19

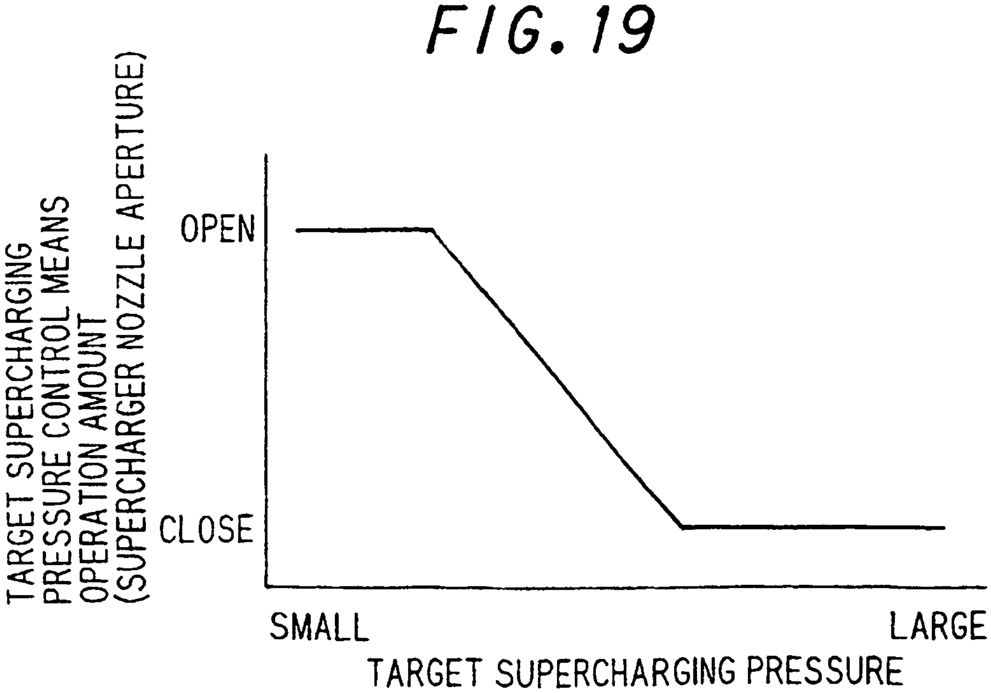
TARGET SUPERCHARGING PRESSURE CONTROL MEANS OPERATION AMOUNT (SUPERCHARGER NOZZLE APERTURE)
OPEN
CLOSE
SMALL
LARGE
TARGET SUPERCHARGING PRESSURE

FIG.20

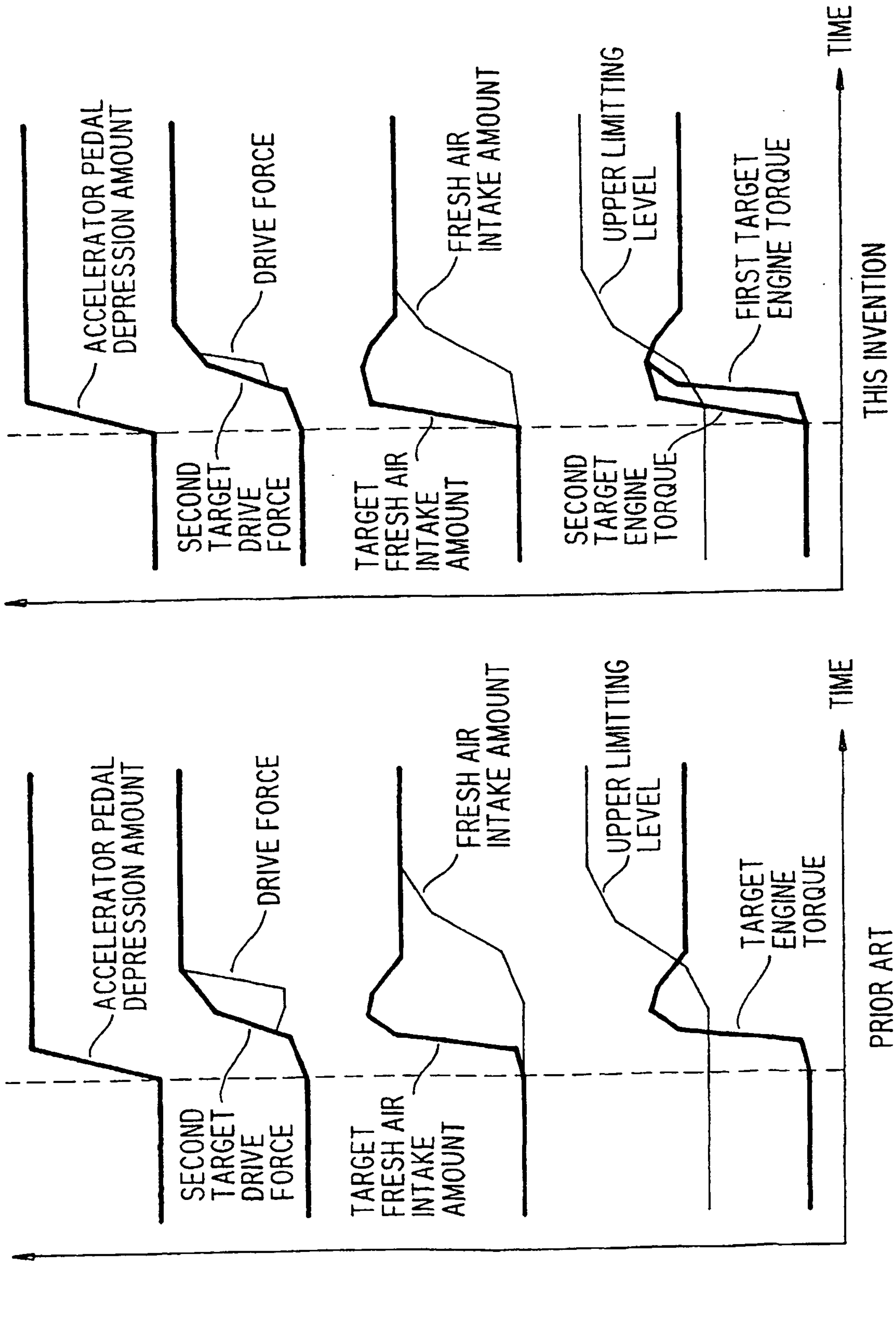
ACCELERATOR PEDAL DEPRESSION AMOUNT
DRIVE FORCE
SECOND TARGET DRIVE FORCE
FRESH AIR INTAKE AMOUNT
TARGET FRESH AIR INTAKE AMOUNT
UPPER LIMITTING LEVEL
FIRST TARGET ENGINE TORQUE
SECOND TARGET ENGINE TORQUE
TIME
THIS INVENTION
ACCELERATOR PEDAL DEPRESSION AMOUNT
DRIVE FORCE
SECOND TARGET DRIVE FORCE
FRESH AIR INTAKE AMOUNT
TARGET FRESH AIR INTAKE AMOUNT
UPPER LIMITTING LEVEL
TARGET ENGINE TORQUE
TIME
PRIOR ART